# EUROPEAN PATENT SPECIFICATION

(11) **EP 0 614 251 B1**
(45) Date of publication and mention of the grant of the patent: **19.11.1997**
(21) Application number: 94301528.9
(22) Date of filing: 03.03.1994
(51) Int. Cl.: H02K 5/14, H01R 39/40

(54) **Brush assembly structure for motor**
Bürstenanordnung für Motoren
Assemblage de balai pour un moteur

(30) Priority: 05.03.1993 JP 15068/93
(43) Date of publication of application: 07.09.1994
(73) Proprietor: Mitsuba Corporation, Kiryu-shi, Gunma-ken (JP)
(72) Inventor: Okabe, Hiroji, Kiryu-shi, Gunma-ken (JP)
(74) Representative: Smith, Norman Ian

(56) References cited:
- EP-A- 0 175 993
- GB-A- 2 189 943
- US-A- 4 593 220

## Description

### Background of the Invention

### Field of the Invention

The present invention relates to a brush assembly structure for a motor used to operate, for example, electric parts of an automobile.

### Description of the Related Art

In general, this kind of brush assembly is mounted so that it can come into elastically sliding contact with the commutator formed on an armature shaft. As a result, when no commutator is present, the brushes project towards the center of the shaft beyond the position of the sliding surface of the commutator. Therefore, if an attempt is made to assemble the armature when the brushes project towards the assembly of the motor, the armature cannot be substantially assembled because it is blocked by the brushes. To cope with this problem, there is a known method in which each brush is tentatively held against a spring at a position spaced apart from a commutator. The armature is assembled in this state and then the tentatively held brush is released. In this case, an operation for tentatively holding each brush and an operation for releasing the tentatively held brush are needed. These operations are time-consuming and troublesome and there is a possibility that the releasing operation may be forgotten sometimes.

Consequently, as disclosed in Japanese Utility Model Unexamined Publication No. Sho 58-115862 and Japanese Utility Model Unexamined Publication No. Sho 58-166262, there is proposed a method by which a brush unit having brushes preset in a brush holder is prepared, an opening is formed to a holder stay unit to which the brush holder is to be mounted and then the brush unit is assembled through the opening after an armature has been preassembled. In the former Publication, however, since brush units must be formed for respective brushes and engaged and assembled, respectively, as many brush units as many as brushes are necessary and thus the number of parts is increased and workability is lowered. Further, since the brush is urged to the state that it projects significantly from the brush unit by a spring assembled in the brush unit, a problem arises in that the brush can strike other parts and is liable to be damaged by them before the brush unit is assembled to the holder stay unit, and the like.

On the other hand, in the latter Publication, since a pair of brushes are assembled in a brush unit, there is an advantage that the number of brush units can be reduced to half those of the former Publication. In this case, however, since a brush accommodation unit is not used, each brush is urged and held in the state that it is exposed through a leaf spring fixed to a brush holder. Thus, the brush cannot be stably held by the brush accommodation unit and further since a guide receiving portion is formed at the extreme end of the leaf spring to guide the brushes so that they come into sliding contact with a commutator in such a manner that the guide receiving portion is in contact with the periphery of the commutator to increase the distance between the confronting brushes. Consequently, in this case, a problem arises in that there is a possibility that the surface of the commutator is scratched by the guide receiving unit in contact therewith.

US-A-4593220 describes a motor having features set out in the pre-characterising part of claim 1.

Taking the above into consideration, the present invention has been created for the purpose of providing a brush assembly structure for a motor by which aforesaid drawbacks can be overcome.

According to the present invention there is provided a motor having a pair of brushes which are accommodated in a pair of brush accommodation units formed to a brush holder so that they can emerge from and retract into the brush accommodation units, respectively, and come into elastic sliding contact with the opposite side positions of a commutator supported by a casing in the diametrical direction thereof, said brush holder being formed to substantially a C-shape in such that the extreme ends of the opposite leg portions of said brush holder confront the opposite side positions of said commutator, said brush accommodation units being formed at each end of said opposite leg portions, said brush accommodation units having opposing open ends for allowing the brushes to emerge from a retract into the brush accommodation unit, a holder stay unit being provided on the casing so that the brush holder can be attached to the holder stay unit in the diemetrical direction, **characterised in that** supporting springs for elastically depressing said brushes are provided on said holder stay unit, said springs being arranged so that they become elastically deformed in accordance with the movements of said brush accommodation unit when it is inserted into the mounting position and elastically depressing said brushes accommodated in said brush accommodation unit at the moment when said brush accommodation unit reaches the mounting position and at the same time said springs reach the outer open ends of said brush accommodation unit.

Since the present invention is arranged as described above, a pair of the brushes are accommodated in the brush accommodation units formed to the brush holder in such a way that they are retracted and not urged to a projected position by the springs and the brush holder and brushes can be assembled as a unit to the holder stay unit, whereby the brushes can be protected and an assembly job can be simplified.

The invention will be described now, by way of example only, with particular reference to the accompanying drawings. In the drawings.

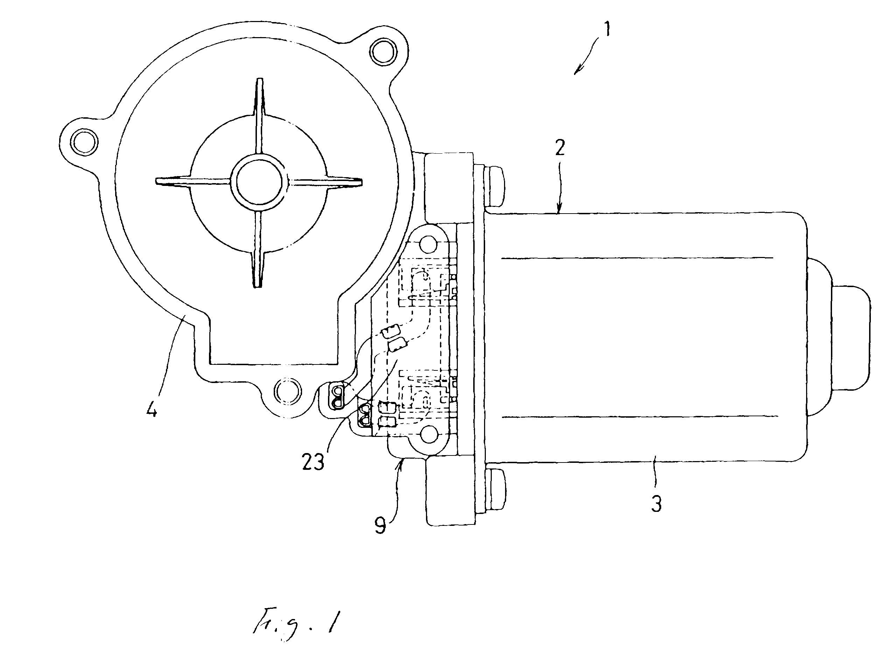

Figure 1 is a plan view of a motor;

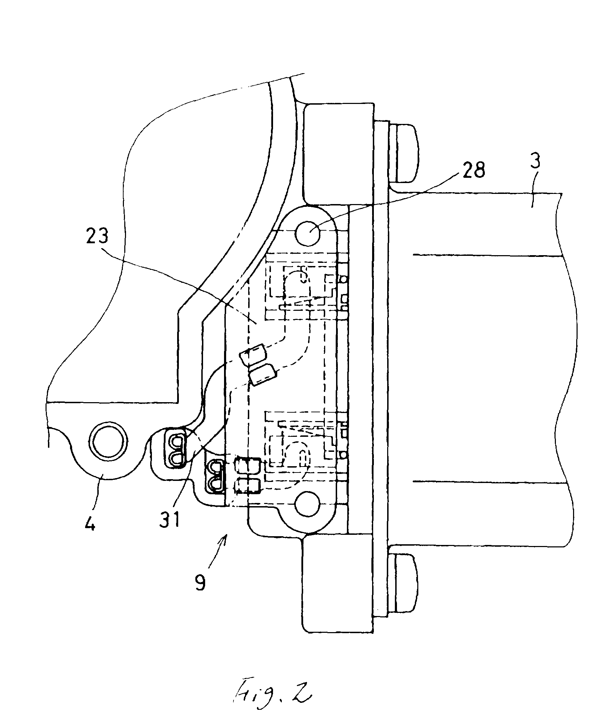

Figure 2 is a plan view of a holder stay unit;
Figure 3 is a horizontal cross sectional view of the holder stay unit;

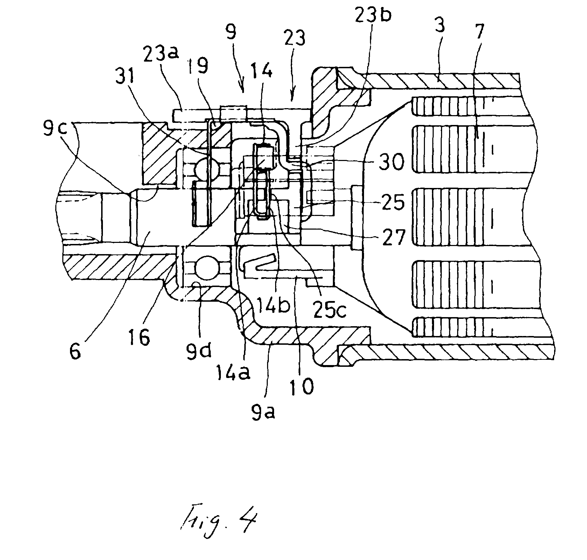

Figure 4 is a vertical cross sectional view of the holder stay unit;
Figure 5 is a side view of the holder stay unit;

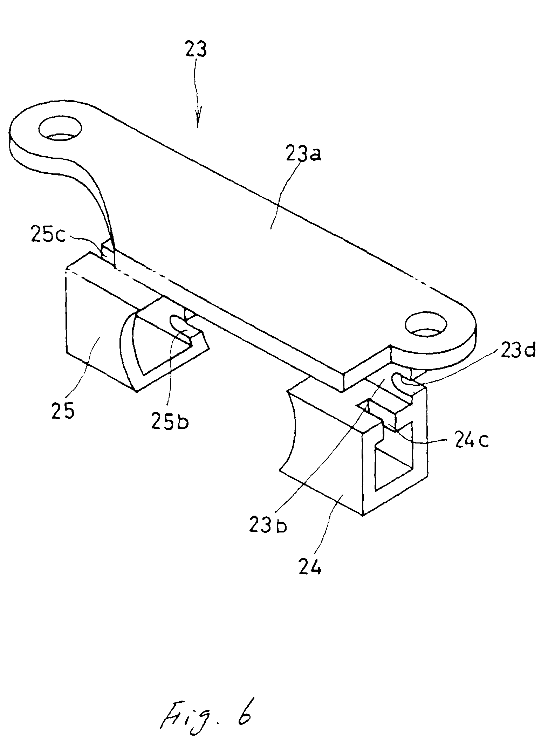

Figure 6 is a perspective view of a brush holder;
Figure 7 is a diagram explaining the processes for assembling a brush unit to the holder stay unit; and
Figures 8 and 9 are views showing the positional relationship of the springs and their supports.

### Description of Preferred Embodiment

Next, an embodiment of the present invention will be described with reference to the drawings, wherein reference numeral 1 designates a motor with a speed reduction mechanism serving as a power source for automotive electric parts and the motor 1 has a casing 2 composed of a cylindrical yoke 3 with a bottom and an end case 4 assembled to the open end of the yoke 3. Although the yoke 3 has various parts such as a permanent magnet 5, an armature shaft 6, an armature core 7 and the like assembled thereto and the end case 4 has the speed reduction mechanism such as a worm gear 6a formed at the extreme end of the armature shaft 6, a worm wheel (not shown) to be meshed with the worm gear 6a, and the like, the basic arrangement of these parts is the same as that of conventional ones.

In the above casing 2, the yoke side end of the end case 4 is formed to a holder stay unit 9 to which a brush unit to be described later is assembled. More specifically, the holder stay unit 9 has a cylindrical shape with a bottom and a commutator 10 integrally formed with the armature shaft 6 is disposed in the cylindrical portion 9a of the holder stay unit 9. The holder stay unit 9 has a width B in a horizontal line H direction which is longer than a width A in a vertical line V direction which is perpendicular to the shaft center of the armature shaft 6 (A < B). An inserting hole 9c through which the worm gear 6a is inserted is formed at the center of the cylindrical bottom portion 9b of the holder stay unit 9 and an engaging groove 9d for a bearing 12 for rotatably supporting the armature shaft 6 is formed to the peripheral edge of the inserting hole 9c.

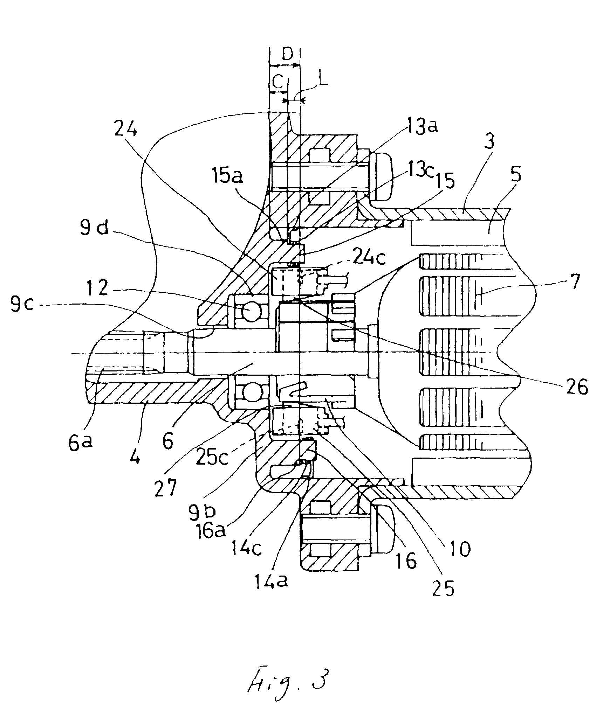

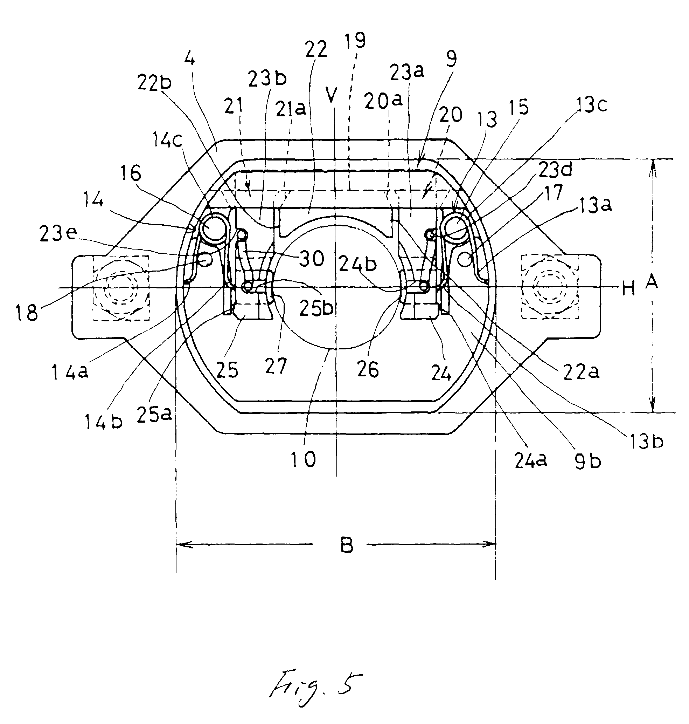

Further, right and left spring support portions 15, 16 and right and left locking portions 17, 18 project from the inner cylindrical side surface of the cylindrical bottom portion 9b, and coil portion 13c, 14c of a pair of right and left twisted coil type brush springs 13, 14 are inserted through and supported by the spring support portions 15, 16, respectively and ends 13a, 14a of the brush springs 13, 14 are locked to the locking portions 17, 18, respectively. As shown in Figure 5, in this embodiment, these parts are disposed above the horizontal line H as well as the spring support portions 15, 16 are disposed symmetrically to each other and the locking portions 17, 18 are also disposed symmetrically to each other, respectively, with respect to the vertical line V. Further, the locking portions 17, 18 are disposed below the spring support portions 15, 16. In addition, the opposite ends 13a, 13b, 14a, 14b of the brush springs 13, 14 are linearly extended, respectively, and the extended extreme end of each of them is expanded and curved. Moreover, when coil portions 13c and 14c of the brush springs 13, 14 are passed through and supported by the spring support portions 15, 16 and the ends 13a, 14a of the springs are held between the locking portions 17, 18 and the inner periphery of the cylindrical portion 9a and locked, the springs 13, 14 are disposed so that the other ends 13b, 14b of the springs 13, 14 project in the inner right and left directions in a natural state and are located at the paths into which the leg portions 23b, 23c of a brush holder to be described later are inserted. It should be noted that the heights of seat portions 15a, 16a formed on the spring support portion 15, 16 are set as follows. As shown in Figure 3 the height C of the position where the brush 13 is mounted is different by a value substantially corresponding to a length X of the brush springs 13, 14 from the height D of the position where the brush spring 14 is mounted (D ≒ C + X). Further, as shown in Figures 8 and 9 relationship is described in more detail as follows. That is, the seat portion 15a of the spring support position 15 is positioned at a height C measured from the cylindrical bottom portion 9b, and the seat portion 16a of the spring support portion 16 is positioned at a height D from the Cylindrical bottom portion 9b. As a result, the height difference between the seat portion 15a and the seat portion 16a is represented as L (L = D - C). When the diameter of the coil is d the height difference L is set such that the length X of the brush spring minus the diameter d of the coil, theoretically given as following formula; L = X - d.

Furthermore, when the distance between the seat portion 15a and the position of the brush 26 present by the brush spring is represented as h, the height difference L is theoretically given as following formula; L = h - (1/2) x d. As a result, when the springs 13, 14 which are twisted in the same direction are mounted so that they are reversed in the right and left directions, the other ends 13b, 14b of the springs project at substantially the same heights, and thus the common brush springs 13, 14 can be used on the right and left sides.

Further, the holder stay unit 9 has a recessed portion 19 formed to the outside upper periphery of the cylindrical portion 9a thereof with respect to the horizontal line H and passing-through holes 20, 21, into which the opposite leg portions 23b, 23c of the brush holder to be described later are inserted from the outside, are formed to the right and left positions of the recessed portion 19. These passing-through holes 20, 21 are disposed inwardly of the spring support portions 15, 16 in the right and left directions and outwardly of the commutator 10 in the right and left directions and are symmetrical with respect to the vertical line V. Further, although these passing-through holes 20, 21 have a substantially square shape, the peripheral edges thereof is formed with taper-shaped portions 20a, 21a each having a wide outside portion and a narrow inside portion which is gradually narrowed from the wide outside portion. Further, a guide member 22 projecting to the commutator 10 side is integrally formed to the inner periphery of the recessed portion 19 between the opposite passing-through holes 20, 21, and guide surfaces 22a, 22b, which are formed on the right and left sides of the guide member 22, extend from the taper-shaped portions 20a, 21a of the passing-through holes to positions in the vicinities substantially on the opposite sides of the commutator 10 in the diametrical direction thereof.

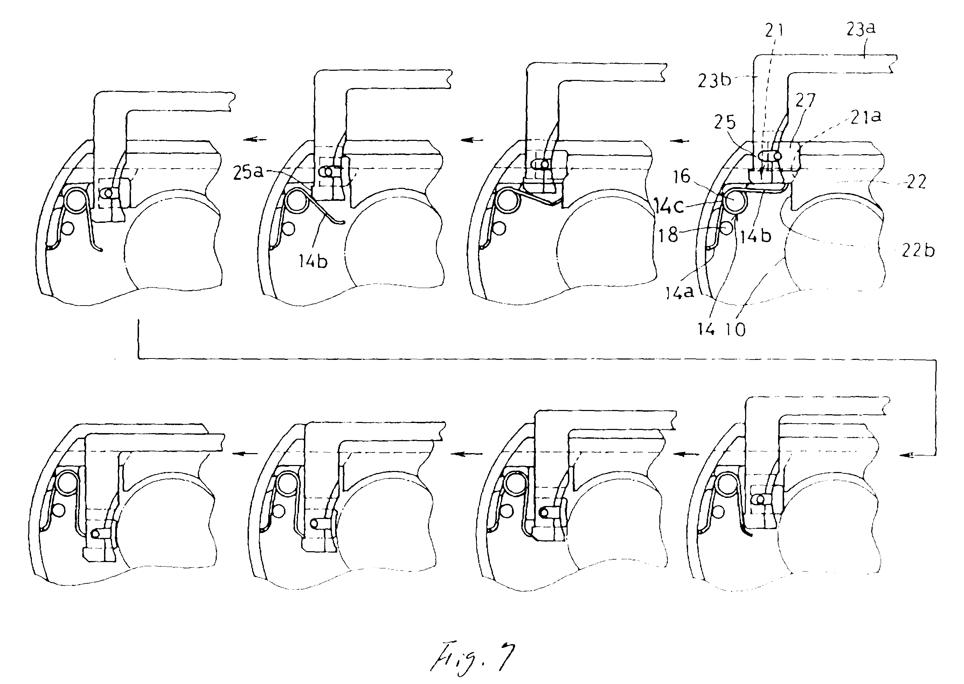

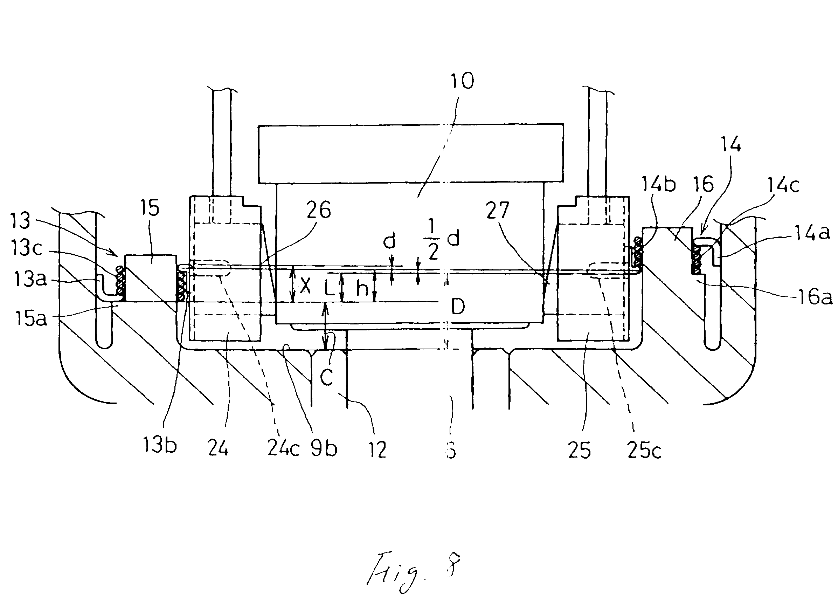

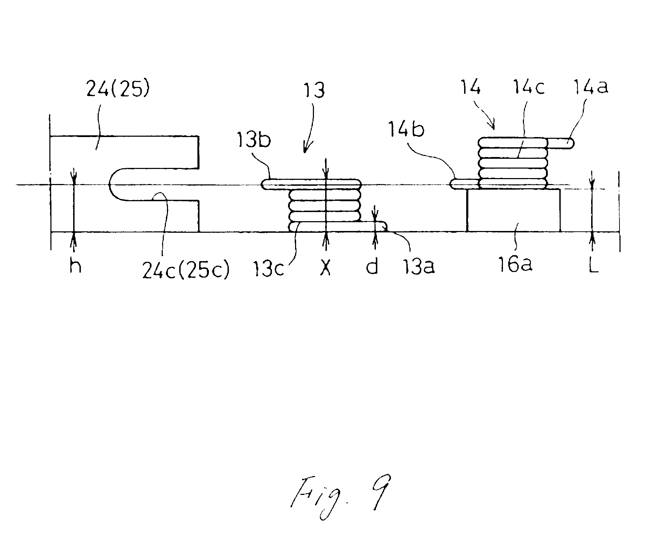

Reference numeral 23 designates a brush holder which is integrally formed to substantially a C-shape and a mounting plate 23a, opposite leg portions 23b, 23c, and quadrangular-prism-shaped brush accommodation units 24, 25. Each unit 24, 25 has both open bottoms formed at the extreme ends of the opposite leg portions 23b, 23c and brushes 26, 27 are accommodated therein in such a manner that they can emerge from and retract into the brush accommodation units. The brush holder 23, which is arranged as a unit and has the brushes 26, 27 accommodated therein, is mounted on the holder stay unit 9, in which an armature assembly composed of the armature shaft 6, armature core 7, commutator and the like is preassembled, through the following mounting structure. More specifically, when the brush holder 23 is to be mounted, the brush springs 13, 14 are presupported by the spring support portions 15, 16 and further the ends 13a, 14a of the brush springs 13, 14 are locked by the locking portions 17, 18 and in this state the opposite leg portions 23b, 23c of the brush holder are inserted into the passing-through holes 20, 21, respectively. At this time, the other ends 13b, 14b of the springs are located at the inserting paths as described above, and as shown in Figure 7, when the opposite leg portions 23b, 23c are gradually inserted, projections 24a, 25a formed to the outside corners on the right and left sides of the extreme ends of the brush accommodation units 24, 25 abut against the other ends of the springs and depress them toward the direction in which the brush springs 13, 14 are urged.

On the other hand, the brushes 26, 27 accommodated in the brush accommodation units 24, 25 are inserted by being guided by the guide surfaces 22a, 22b of the guide member 22 until the extreme ends to be inserted thereof come into contact with the commutator 10 and thereafter inserted in the state that they are guided by the commutator 10. At the moment when the brushes 26, 27 reach the right and left side positions of the commutator 10 in the diametrical direction thereof, the other ends 13b, 14b of the springs are released from the projections 24a, 25a of the brush accommodation units and abut against the outside surfaces of the brushes 26, 27 in the diametrical direction thereof to elastically urge the brushes 26, 27 toward the commutator 10. Further, when the brushes 26, 27 reach the right and left side positions of the commutator 10 in the diametrical direction thereof, the mounting plate 23a abuts against the outside periphery of the recessed portion 19 to regulate the further insertion of the opposite leg portions 23b, 23c. When the mounting plate 23a is fixed to the recessed portion 19 by a screw 28 in this state, the brush holder 23 can be integrally mounted on the holder stay unit 9.

Note, reference numerals 23d, 23e, 24b and 25b in the figures designate fret grooves for a pig tail 30 formed to each of the opposite leg portions 23b, 23c and brush accommodation units 24, 25, reference numerals 24c, 25c, designate grooves for inserting the other ends 13b, 14b, of the spring therein and further reference numeral 31 designates an external connection terminal to which the extreme end of the fretted pig tail 30 is connected.

In the embodiment of the present invention arranged as described above, when the brushes 26, 27 are to be assembled to the motor 1, the brush springs 13, 14 are assembled to the cylindrical bottom portion 9a of the holder stay unit 9 preformed to the casing 2 and the armature assembly is assembled to the holder stay unit 9, as described above. Then, in this state, the opposite leg portions 23b, 23c of the brush holder 23 which has the brushes 26, 27 preassembled thereto and is arranged as the unit are inserted into and assembled to the passing-through holes 20, 21 of the holder stay unit 9. In this case, however, since the brush unit is formed by assembling the brushes 26, 27 to a pair of the brush accommodation units 24, 25 formed to the brush holder 23, respectively, the brushes 26, 27 can be stably held by the brush accommodation units 24, 25, it is not necessary to form a brush unit to each brush, the number of parts can be reduced, and further the number of processes for an assembly job can be also reduced.

In the above embodiment, the brush springs 13, 14 are not assembled to the brush holder 23 but assembled to the holder stay unit 9 and further the brushes 26, 27 are elastically depressed at the moment when the brushes 26, 27 substantially reach the opposite side positions of the commutator 10 in the diametrical direction thereof based on the insertion and assembly of the brush holder 23 to the holder stay unit 9. As a result, when the brush unit is assembled to the holder stay unit, the brushes do not greatly project from the brush unit as in the case in which the brush springs are assembled to the brush holder, whereby the brushes 26, 27 are prevented from being in hitting contact with other parts, and thus it is not necessary at all that the brushes 26, 27 are temporarily held by the brush holder 23.

Further, in this embodiment, when the brush unit is assembled to the holder stay unit 9, the brushes 26, 27 are first inserted into the passing-through holes 20, 21 by being guided by the taper-shaped potions 20a, 21a of the passing-through holes 20, 21 and then inserted by being guided by the guide surfaces 22a, 22b of the guide member 22 until the extreme ends to be inserted of the brushes 26, 27 come into contact with the commutator 10, and thereafter the brushes 26, 27 reach the opposite side positions of the commutator in the diametrical direction thereof in the state that they are guided by the commutator 10. Therefore, the brushes can be easily guided to a proper position. Furthermore, when the brush unit is assembled, it is substantially only the brushes 26, 27 that come into contact with the commutator 10 and the guide receiving portion which is formed at the extreme end of the leaf spring is not in sliding contact with the commutator as in prior art. As a result, there is no possibility that the surface of the commutator is scratched by the guide receiving portion.

Furthermore, since the brush springs 13, 14 used in this embodiment are of the twisted coil type, there can be prevented a disadvantage that the leaf spring is vibrated by the vibration produced by the rotation of the commutator and transmitted to the leaf spring through the brushes and noise is produced by the vibration of the leaf spring as in the case in which the leaf spring is used.

Further, since the brush unit is assembled from the outer periphery on the upper side of the cylindrical portion 9a of the holder stay unit, the brush unit and the speed reduction mechanism can be assembled from the same direction in such a case as this embodiment in which the speed reduction mechanism such as the worm wheel and the like are assembled from the upper side of the end case 4, which greatly contributes to the simplification of an automatic assembly line when the motor 1 is assembled on this line.

In short, since the present motor is arranged as described above, when the brushes are to be assembled to the motor, the opposite leg portions of the brush holder having the brushes assembled thereto and arranged as a unit are inserted and assembled to the holder stay unit to which the armature assembly is preassembled through the passing-through holes. In this case, since the brush unit is formed by assembling the brush to each of a pair of the brush accommodation units formed to the brush holder, these brushes can be stably held by the brush accommodation units. Further, since the pair of brushes can be assembled to the single brush unit, a brush unit need not be formed to each brush, and thus not only the number of parts can be reduced but also the number of processes for an assembly job also can be reduced.

In addition, according to the present embodiment, the springs for elastically depressing the brushes are assembled to the holder stay unit, and the brushes are elastically depressed at the moment when the brushes substantially reach the opposite side positions of the commutator in the diametrical direction thereof based on the insertion and assembly of the brush holder to the holder stay unit. As a result, when the brush unit is assembled to the holder stay unit, the brushes do not greatly project from the brush unit as in the case in which the brush springs are preassembled to the brush holder, whereby the brushes are prevented from being in hitting contact with other parts, and thus it is not necessary at all that the brushes are tentatively held to prevent the brushes to greatly project from the brush unit.

Furthermore, when the brush unit is assembled, it is substantially only the brushes that come into contact with the commutator and the guide receiving portion which is formed at the extreme end of the leaf spring is not in sliding contact with the commutator as in prior art. As a result, a possibility that the surface of the commutator is scratched by the guide receiving portion can be securely prevented.

## Claims

1. A motor having a pair of brushes (26, 27) which are accommodated in a pair of brush accommodation units (24, 25) formed to a brush holder (23) so that they can emerge from and retract into the brush accommodation units, respectively, and come into elastic sliding contact with the opposite side positions of a commutator (10) supported by a casing (2) in the diametrical direction thereof, said brush holder (23) being formed to substantially a C-shape in such that the extreme ends of the opposite leg portions (23b, 23c) of said brush holder confront the opposite side positions of said commutator, said brush accommodation units (24, 25) being formed at each end of said opposite leg portions, said brush accommodation units having opposing open ends for allowing the brushes (26, 27) to emerge from a retract into the brush accommodation unit, a holder stay unit (9) being provided on the casing (2) so that the brush holder can be attached to the holder stay unit in the diemetrical direction,
characterised in that supporting springs (13, 14) for elastically depressing said brushes (26, 27) are provided on said holder stay unit, said springs being arranged so that they become elastically deformed in accordance with the movements of said brush accommodation unit when it is inserted into the mounting position and elastically depressing said brushes (26, 27) accommodated in said brush accommodation unit at the moment when said brush accommodation unit reaches the mounting position and at the same time said springs reach the outer open ends of said brush accommodation unit.

## Patentansprüche

1. Motor mit einem Paar Bürsten (26,27), die auf einem Paar Bürstenaufnahmeeinheiten (26,25) untergebracht sind, die ihrerseits einen Bürstenhalter (23) bilden, wobei es die Zuordnung der Bürsten ermöglicht, daß sie in die Bürstenaufnahmeeinheiten zurückgezogen sind bzw. aus den Bürstenaufnahmeeinheiten herausstehen, um dann in nachgiebigen Gleitkontakt mit gegenüberliegenden Seitenbereichen eines von einem Gehäuse (2) diametral einander entgegengesetzt gestützten Kommutators zusammenzuwirken, wobei der Bürstenhalter (23) in der Weise im wesentlichen C-förmig ausgebildet ist, daß die Außenenden der einander gegenüberliegenden Schenkelteile (23b,23c) des Bürstenhalters den gegenüberliegenden Seitenbereichen des Kommutators gegenüberliegen, wobei ferner die Bürstenaufnahmeeinheiten (24,25) an jedem Ende der einander gegenüberliegenden Schenkelteile ausgebildet sind, wobei jeweils die Bürstenaufnahmeeinheiten einander gegenüberliegende offene Enden haben, um es den Bürsten (26,27) möglich zu machen, aus der jeweiligen Bürstenaufnahmeeinheit herauszugelangen, wobei weiter eine Halterungsaufnahmeeinheit (9) dem Gehäuse (2) so zugeordnet ist, daß der Bürstenhalter in diametraler Richtung der Halterungsaufnahmeeinheit zugeordnet werden kann,
**dadurch gekennzeichnet, daß** Stützfedern (13,14) zum elastischen Einwirken auf die Bürsten (26,27) der Halterungsaufnahmeeinheit zugeordnet sind derart, daß sie entsprechend den Bewegungen der Bürstenaufnahmeeinheit beim Verbringen in die Einbauposition elastisch verformt werden und die der Bürstenaufnahmeeinheit zugeordneten Bürsten (26,27) dann elastisch niederdrücken, wenn die Bürstenaufnahmeeinheit ihre Einbauposition erreicht und gleichzeitig die Federn die äußeren offenen Enden der Bürstenaufnahmeeinheit erreichen.

## Revendications

1. Moteur comportant une paire de balais conducteurs (26, 27) qui sont montés dans une paire d'unités de logement de balais conducteurs (24, 25) formées sur un support de balais (23) leur permettant de sortir et d'entrer dans les unités de logement de balais respectivement et venir en contact coulissant élastique avec les positions latérales opposées d'un commutateur (10) monté sur un boîtier (2) dans sa direction diamétrale, le support de balais (23) étant conçu sensiblement en forme de C de telle sorte que les extrémités des portions de branches opposées (23b, 23c) du support de balais sont en regard des positions latérales opposées du commutateur, les unités de logement de balais (24, 25) étant formées sur chaque extrémité des portions de branches opposées, ces unités de logement de balais comportant des extrémités ouvertes en regard pour permettre aux balais (26, 27) de sortir et d'entrer dans l'unité de logement de balais, une unité de fixation de support (9) étant disposée sur le boîtier (2) de façon à assujettir le support de balais sur l'unité de fixation de support dans la direction diamétrale,
caractérisé en ce que les ressorts de support (13, 14) prévus pour solliciter élastiquement ces balais (26, 27) sont disposés sur l'unité de fixation de support, ces ressorts étant disposés de façon à se déformer élastiquement en fonction des mouvements de l'unité de logement de balais lorsqu'elle est introduite dans la position de montage et à solliciter élastiquement les balais (26, 27) logés dans cette unité de logement de balais au moment où l'unité de logement de balais parvient sur la position de montage et que simultanément, les ressorts parviennent sur les extrémités ouvertes extérieures de l'unité de logement de balais.
